# NOUVEAU FASCICULE DE BREVET EUROPEEN

(11) **EP 0 421 833 B2**
(45) Date de publication et mention de la décision concernant l'opposition: **11.08.1999**
(45) Mention de la délivrance du brevet: 15.02.1995
(21) Numéro de dépôt: 90402445.2
(22) Date de dépôt: 06.09.1990
(51) Int. Cl.: B60J 1/02, B60J 10/02, C03C 27/04, B29C 47/02

(54) **Vitrage avec cadre profilé particulierement vitrage automobile ainsi que le procédé et le dispositif pour la fabrication d'un tel vitrage**
Verglasung mit einem Profilrahmen, insbesondere Fahrzeugverglasung, und Verfahren und Vorrichtung zu deren Herstellung
Glazing with profile frame, in particular vehicle glazing, and process and device for the manufacture of such a glazing

(30) Priorité: 12.09.1989 DE 3930414; 31.05.1990 US 531191
(43) Date de publication de la demande: 10.04.1991
(60) Demande divisionnaire: 94105771.3
(73) Titulaire: SAINT-GOBAIN VITRAGE, 92400 Courbevoie (FR); VEGLA Vereinigte Glaswerke GmbH, 52066 Aachen (DE)
(72) Inventeur: Cornils, Gerd, D-5161 Merzenich-Girbelsrath (DE); Kunert, Heinz, D-5000 Köln 41 (DE); Schnitter, Heinrich, D-5107 Simmerath (DE)
(74) Mandataire: Muller, René

(56) Documents cités:
- EP-A- 0 121 479
- EP-A- 0 122 636
- EP-A- 0 188 391
- EP-A- 0 248 707
- EP-A- 0 256 946
- EP-A- 0 258 128
- EP-A- 0 298 788
- EP-A- 0 306 070
- EP-A- 0 307 316
- EP-A- 0 307 317
- EP-A- 0 345 134
- EP-A- 0 345 134
- DE-A- 3 323 006
- DE-U- 8 202 672
- FR-A- 1 135 684
- FR-A- 2 266 669
- GB-A- 1 219 511
- US-A- 4 581 276

## Description

L'invention concerne un vitrage prévu pour le collage sur la tôle d'une baie de fenêtre, en particulier un vitrage automobile. Celui-ci est équipé par extrusion d'un polymère adapté sur la surface du verre en face de la tôle, d'un cadre profilé qui, après polymérisation, servira grâce à un appendice, d'élément de protection et de centrage pendant la prise de la colle fixant le vitrage. L'invention concerne de plus un procédé pour fabriquer un tel vitrage ainsi qu'un dispositif pour mettre en oeuvre le procédé.

Les vitrages automobiles sont aujourd'hui dans leur majorité collés directement sur la tôle de la baie dans la carrosserie. Il s'est avéré intéressant de préparer le vitrage en vue de son montage par une phase de travail préliminaire par exemple dans l'usine où le vitrage a été produit. On l'équipe ainsi d'un profilé par extrusion sur le vitrage qui, après polymérisation, coopérera avec le vitrage et le cordon de colle destiné au collage final du vitrage. En procédant de la sorte on limite, lors du montage du parebrise, les opérations de nettoyage et de primage du vitrage. Globalement l'opération de préparation et de montage du vitrage est ainsi plus économique. Ce procédé est décrit par exemple dans le brevet EP-A-0 121 481.

Mais lorsqu'on pose le vitrage dans la baie de la carrosserie, il est essentiel qu'il occupe, durant la phase de prise du cordon de colle, une place bien définie et qu'il la garde. On utilise pour ce faire des dispositifs ou des accessoires adaptés ainsi, dans la demande de brevet EP-A- 0 307 317, on décrit un dispositif avec des tiges dirigées vers la surface du vitrage qui comportent une surface d'appui. Lors du montage du pare-brise, elles servent à en supporter le poids, en effet elles exercent une réaction sur la baie de la fenêtre. Cette solution bien connue nécessite cependant des éléments d'appui supplémentaires dans la baie. Par ailleurs, il est nécessaire de surveiller la position précise du vitrage dans la baie de manière que l'écart entre le bord du vitrage et la carroserie tel qu'il est visible de l'extérieur soit constant. S'il n'en était pas ainsi, les irrégularités de largeur obligeraient à disposer un cache pour obturer la rainure.

L'invention se donne pour mission de fournir les moyens de réaliser un vitrage, particulièrement vitrage automobile, équipé d'un cadre profilé obtenu par extrusion qui comporte une lèvre qui déborde du vitrage qui est sensiblement parallèle à la surface du verre avec une longueur de 5 à 10 mm.

L'invention propose donc un procédé pour fabriquer un vitrage, particulièrement un vitrage automobile destiné au collage direct dans la baie d'une fenêtre, le vitrage étant équipé d'un cadre profilé extrudé muni d'une lèvre débordant de la périphérie du vitrage, procédé selon lequel on place sur le bord du vitrage une buse profilée à ouverture calibrée afin d'extruder le cadre et la lèvre et où on déplace la buse le long de celui-ci en l'alimentant régulièrement avec le polymère puis en arrêtant le débit et en écartant la buse du vitrage lorsqu'elle a rejoint les environs de sa position de départ, (vitrage du type divulgué, par exemple, dans EP-A-0 307 317, EP-A- 0 121 481 ou DE-A-33 23 006), la viscosité et la thixotropie du polymère étant telles que la lèvre débordant de la périphérie du vitrage dans une position sensiblement horizontale reste en place sans appui, dans lequel le domaine de transition entre le début et la fin du profilé extrudé est rectifié par deux outils calibrés dont l'un est fixe tandis que l'autre est mobile. Il faut aussi que la bavure qui subsiste après la rectification avec les outils calibrés soit séparée après prise totale du polymère.

Il est prévu également de placer entre les outils et le profilé extrudé des films minces qui restent au contact du profilé à la fin de la rectification et qui sont séparés après prise du polymère.

Il est également prévu qu'on ébavure l'extrémité de la lèvre avec ses deux films protecteurs puis qu'on sépare les deux films protecteurs eux-mêmes du profilé.

Les matériaux utilisés pour les films protecteurs sont du polyéthylène ou du polyester avec une épaisseur de 3 à 20 µm, lorsqu'on utilise un polymère qui polymérise à l'humidité de l'air, le film recouvrant le profilé est un film perméable à la vapeur d'eau. Il peut être poreux ou percé de microperforations. Par ailleurs, les films sont fixés par dépression sur les surfaces des outils de pressage.

Dans le procédé suivant un mode de réalisation de l'invention, l'outil mobile avec une forme inférieure précise, est placé au-dessus du profilé sous une inclinaison telle que c'est la partie de l'outil opposée à la lèvre qui touche la première le vitrage et ensuite seulement, l'outil qui dans un mouvement de bascule vient au contact de l'outil fixe qui a été mis en position antérieurement.

Dans une variante, après que l'outil fixe ait été mis en place, c'est d'abord l'outil mobile qui vient épouser la partie supérieure du profilé situé au-dessus du vitrage puis, dans un deuxième temps, l'outil mobile vient rectifier la forme de la lèvre.

C'est également un objet de l'invention de proposer des outils pour presser le profilé dans la zone de transition critique.

L'invention propose donc un dispositif pour rectifier immédiatement après fabrication du vitrage suivant le procédé précédemment décrit, la fin et le début d'un cadre profilé extrudé muni d'une lèvre débordant de la périphérie du vitrage, le cadre profilé étant engendré par le déplacement de la buse le long du bord du vitrage, qui comporte un pied inférieur destiné à toucher le vitrage par le dessous et ayant une forme épousant la lèvre ainsi qu'un poinçon dont la forme épouse la forme supérieure à donner au profilé et à la lèvre, ce poinçon étant mobile de manière à rectifier le cadre et la lèvre par pressage contre le pied inférieur. Le dispositif dans une de ses variantes est équipé de moyens de mouvement et de guidage qui approchent le poinçon en biais jusqu'au contact sur le vitrage et qui le font tourner jusqu'au contact avec le pied inférieur.

Dans une autre variante, le dispositif est équipé de moyens de mouvement et de guidage qui approchent d'abord une partie du poinçon pour le mettre au contact du vitrage puis dans un deuxième temps approchent une autre partie du poinçon jusqu'au contact du pied inférieur. Le pied inférieur et le poinçon sont avantageusement équipés de perçage débouchant sur leurs surfaces.

Les détails et les avantages de l'invention sont expliqués dans ce qui suit grâce aux figures. Parmi celles-ci, on trouve :
- figure 1 : vitrage conforme à l'invention en position dans la baie et en coupe,
- figure 2 : fabrication du cadre profilé grâce à une buse d'extrusion,
- figure 3 : la zone de transition du cadre profilé après le retrait de la buse d'extrusion,
- figure 4 : la rectification par pressage de la zone de transition grâce à un outil conforme à l'invention,
- figure 5 : la zone de transition du cadre profilé après la phase de pressage et,
- figure 6 : une variante de l'outil de pressage selon l'invention.

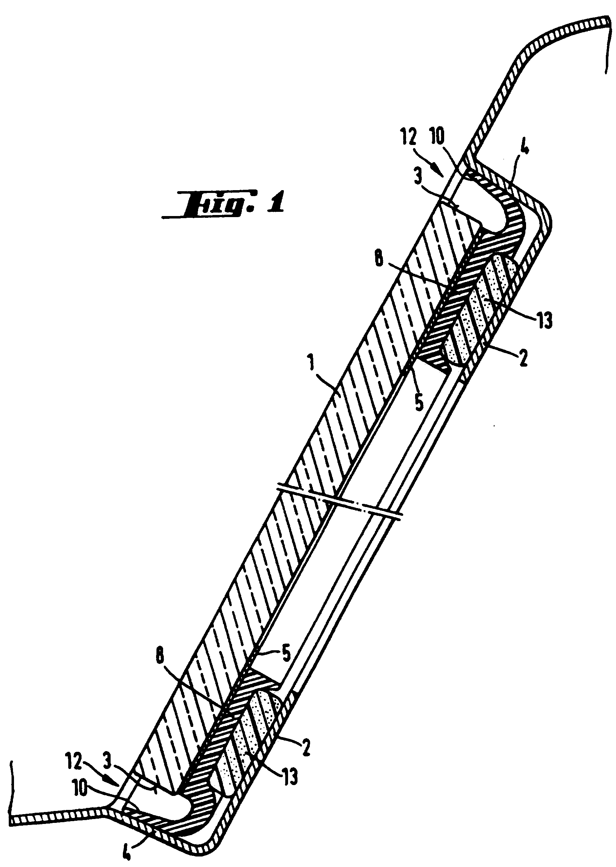

Dans la configuration représentée figure 1 le vitrage 1 est un pare-brise, il est placé dans la baie d'une carrosserie automobile. Cette baie est limitée d'une part par la tôle de fixation 2 qui est parallèle à la surface du vitrage, et d'autre part par la tôle 4 dont la surface est perpendiculaire à la surface du vitrage. Le vitrage 1 est représenté sous forme d'une feuille de verre monolithique mais il est bien évident qu'il peut s'agir aussi bien d'un vitrage feuilleté. Le vitrage 1 est équipé à sa périphérie sur la surface opposée à la tôle de fixation 2 d'une couche opaque 5 qui est par exemple constituée d'un émail cuit à chaud. La fonction de cette couche 5 est d'éviter que l'on puisse voir au travers du vitrage, à partir de l'extérieur, les éléments de collage et en même temps de protéger la colle contre les ultra-violets.

Le vitrage 1 est équipé sur sa surface opposée à la tôle de fixation 2 d'un cadre profilé 8. Celui-ci est réalisé en un polymère qui, une fois terminé, possède les caractéristiques d'un élastomère. Le cadre profilé 8 adhère à la couche opaque 5. Le cadre profité 8 possède une lèvre périphérique 10. Cette lèvre 10 possède avant l'introduction du vitrage 1 dans la baie une forme droite. Elle est à ce moment sensiblement parallèle à la surface du vitrage et déborde de sa périphérie 3 d'environ 5 à 10 mm. La lèvre 10 se déforme au moment de l'introduction du vitrage dans la baie et subit une pliure vers l'arrière en se positionnant sur toute sa longueur le long de la tôle 4 qui se trouve vis à vis du chant 3 du vitrage. De cette manière lorsque le vitrage est introduit dans la baie, il se trouve automatiquement centré et on voit apparaître une rainure 12 de largeur constante tout autour. Par ailleurs, la lèvre 10 est utilisée dans la partie inférieure du vitrage 1 pour supporter son poids de telle sorte qu'aucun calage n'est plus nécessaire pendant le temps qui sépare la mise en place du vitrage et la prise de la colle. De plus, la lèvre 10 sert à fermer la rainure 12 et elle la rend étanche.

Le dimensionnement de la lèvre 10, c'est-à-dire la longueur et l'épaisseur de sa section doit être déterminée de telle sorte que les fonctions à remplir par la lèvre 10 le soient le mieux possible.

Dans la description et les figures suivantes la couche 5 en forme de cadre n'est plus représentée pour des raisons de simplicité.

La liaison entre le vitrage lui-même et/ou le cadre profilé 8 d'une part qui équipe le vitrage 1 au moment de sa pose et d'autre part la tôle de fixation 2 est réalisée comme on l'a vu grâce au cordon de colle 13. La colle est composée d'un polymère qui est conçu pour adhérer de manière fixe et permanente au cadre 8 et éventuellement au verre ou à la couche 5. Ce sera par exemple un polyuréthane mono-composant polymérisant grâce à l'humidité de l'air. La pression qui doit être exercée pendant la durée de prise du cordon de colle 13 entre le vitrage et la tôle de fixation 2 est également assurée grâce à la lèvre 10 du cadre profilé 8. Elle possède en effet un fort coefficient de frottement et sa raideur relative lui permet de compenser la force de réaction exercée par le cordon de colle 13.

La fabrication du cadre profilé 8 se fait d'une manière connue en soi par extrusion d'un polymère adapté et qui adhère sur le vitrage. De tels polymères adaptés à la fabrication d'un cadre profilé sont par exemple des polyuréthanes à un composant sous forme pâteuse qui se transforment sous l'influence de l'humidité de l'air en élastomère à module élevé. Des systèmes polymères de la sorte sont décrits par exemple dans le brevet américain US-A-3 779 794. Il est également possible d'utiliser des systèmes à deux composants comme ceux qui sont décrits dans les brevets européens EP-A-0083797 ou EP-A-0024501. En fonction de la nature de la colle utilisée il aura fallu préparer la surface sur laquelle le cordon est déposé à l'aide de couches de primage telles que la couche 6 selon des procédés connus.

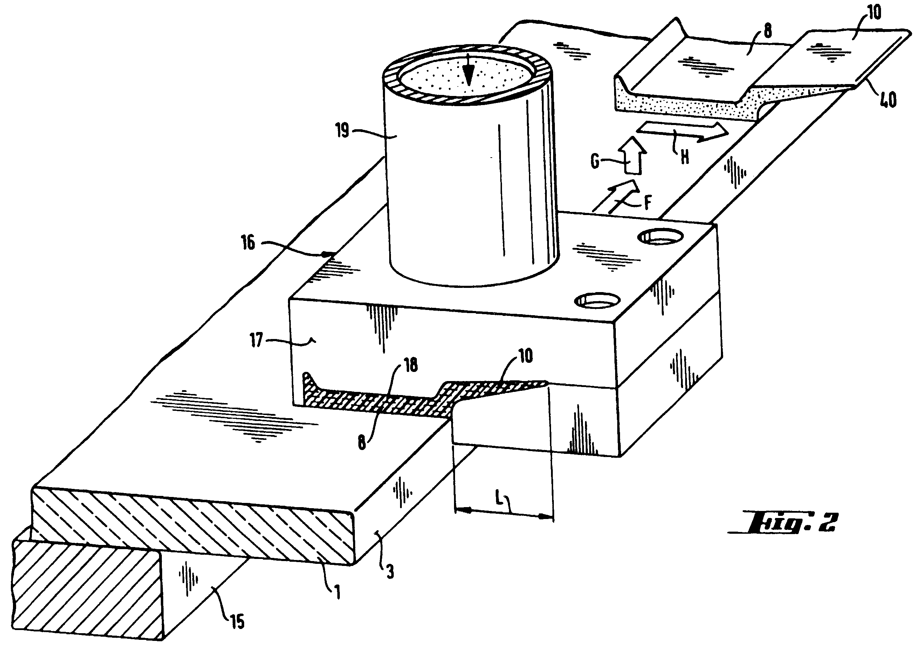

Pour déposer le cadre profilée 8 sur le vitrage 1, on commence comme il est représenté figure 2 par déposer le vitrage sur un cadre support 15 de manière à ce qu'il soit en position horizontale. Il est fixé dans cette position par des moyens adaptés, par exemple des ventouses. On déplace alors la tête d'extrusion le long du bord du vitrage. Cette opération est effectuée de préférence par un robot programmé en conséquence. La tête d'extrusion possède une buse 16 qui est appliquée sur le verre et se déplace dans le sens de la flèche F. La buse 16 possède sur sa face arrière 17 une ouverture calibrée 18. Celle-ci fournit au profilé 8 la forme souhaitée. La stabilité de la forme de la lèvre 10 qui est engendrée par la buse d'extrusion sur une longueur L est telle que la lèvre 10 garde sa forme et sa direction sensiblement horizontale sans avoir besoin d'être soutenue. Ce résultat est obtenu par le choix des propriétés de viscosité et de thixotropie de la matière polymérisable. Celle-ci est amenée à la buse d'extrusion 16 par le tube 19. Ce tube relie la tête d'extrusion 16 à un dispositif de pompage et de dosage qui permet de délivrer le fluide avec la pression et le débit voulus à la tête d'extrusion 16. L'extrusion s'effectue tout le long de la périphérie 3 du vitrage 1. On obtient ainsi un cadre profilé 8 fermé sur lui-même. A l'instant précis où la buse 16 atteint l'emplacement où l'extrusion a commencé, le débit de polymère est stoppé de même que le déplacement de la tête d'extrusion. La tête d'extrusion 16 est alors déplacée légèrement dans la direction de la flèche G ce qui l'écarte du verre puis un autre déplacement a lieu perpendiculairement, dans la direction de la flèche H.

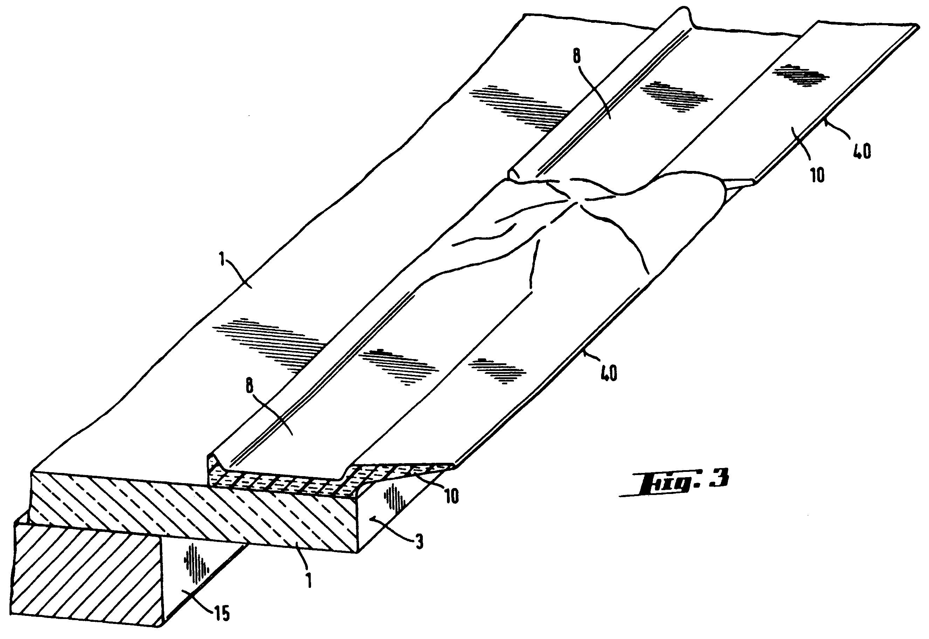

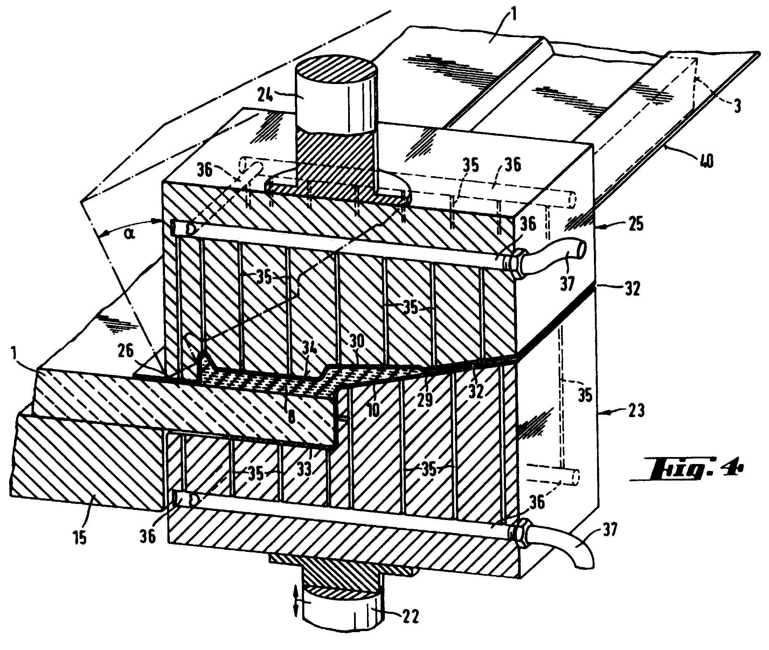

Comme le montre la figure 3, les opérations précédentes fournissent à l'endroit où la tête d'extrusion 16 s'est écartée du verre, c'est-à-dire à la soudure encre le départ et l'arrivée du cadre profilé 8, une discontinuité informe. Ce point de soudure, zone de transition entre deux parties du cadre qui ont un profil parfait, nécessite d'être traité séparément dans une phase de fabrication supplémentaire qui est représentée dans les figures 4 à 6. Pendant l'opération de rectification de la zone de transition du cadre profilé 8 le vitrage 1 repose toujours sur son cadre support 15. Dès que la tête d'extrusion a été écartée du vitrage un porte-outil adapté et non représenté sur les figures présente un outil en deux parties sur le vitrage : un pied inférieur 23 qui est associé au porte-outil par la liaison 22 ainsi qu'un poinçon 25 qui est porté, lui, grâce à la liaison 24. Le pied 23 dès qu'il a touché le vitrage par en dessous, se déplace pour venir en butée contre le bord du verre. Le poinçon 25 se présente incliné d'un angle µ par rapport au vitrage puis est déplacé dans cette position vers le bas jusqu'à ce que son arête 26 touche la surface du verre. Il entame alors un mouvement de rotation autour de cette arête jusqu'à venir au contact de la feuille de verre et du pied 23. On obtient ainsi que le cadre profilé y compris sa lèvre 10 prenne la forme voulue à l'endroit du raccord du profilé. L'irrégularité est alors supprimée.

La partie supérieure du pied 23 a une forme 29 qui correspond à l'épaisseur du vitrage 1 et qui suit la partie inférieure de la lèvre 10. De même le poinçon 25 a lui aussi une forme précise 30 qui correspond à la limite supérieure du profilé 8 et de la lèvre 10. Le mouvement de translation et de basculement subi par le poinçon 25 permet de remplir les lacunes éventuelles du profilé et d'évacuer l'excès de matières dans le prolongement de la lèvre 10 au travers de la fente 32. Après polymérisation de l'élastomère, l'excès de matière pourra être ébavuré à l'extrémité de la lèvre 10.

Avant de débuter la phase de rectification précédente, c'est-à-dire lorsque l'outil de pressage est en position d'attente, on a déposé sur les surfaces 29 du pied 23 et 30 du poinçon 25 une feuille 33, 34 d'une épaisseur de 4 à 10 mm. La dimension de cette feuille est dans chaque cas celle de la pièce concernée. Les feuilles 33 et 34 doivent épouser exactement les surfaces qu'elles recouvrent. C'est pourquoi aussi bien le pied 23 que le poinçon 25 sont équipés d'une série de perçages 35 qui débouchent sur les surfaces 29 ou 30. Ces perçages sont reliés à des ajutages répartiteurs 36. L'un de ceux-ci est relié par un tuyau souple 37 à une pompe non représentée. La pompe crée une dépression qui plaque les feuilles 33 et 34 sur chacune des deux surfaces 29 et 30. A la fin de l'opération de rectification, les tuyaux 37 sont remplis d'air ce qui permet aux feuilles 33 et 34 de se séparer des outils de pressage. Les feuilles 33 et 34 restent plaquées contre le matériau du profilé 8 mais n'y adhèrent pas. On peut donc les en séparer facilement à la fin de la polymérisation.

Les feuilles 33, 34 sont constituées d'un matériau dont la surface a des propriétés anti-adhésives par rapport au matériau polymère du profilé 8. De bons résultats ont été obtenus avec des feuilles minces de polyester ou de polyéthylène. Dans le cas où le polymère du cadre profilé 8 polymérise à l'humidité de l'air, il convient que les feuilles 33 et 34 possèdent une perméabilité suffisante à la vapeur d'eau. Eventuellement, il sera nécessaire de créer une porosité déterminée ou même de percer des microperforations.

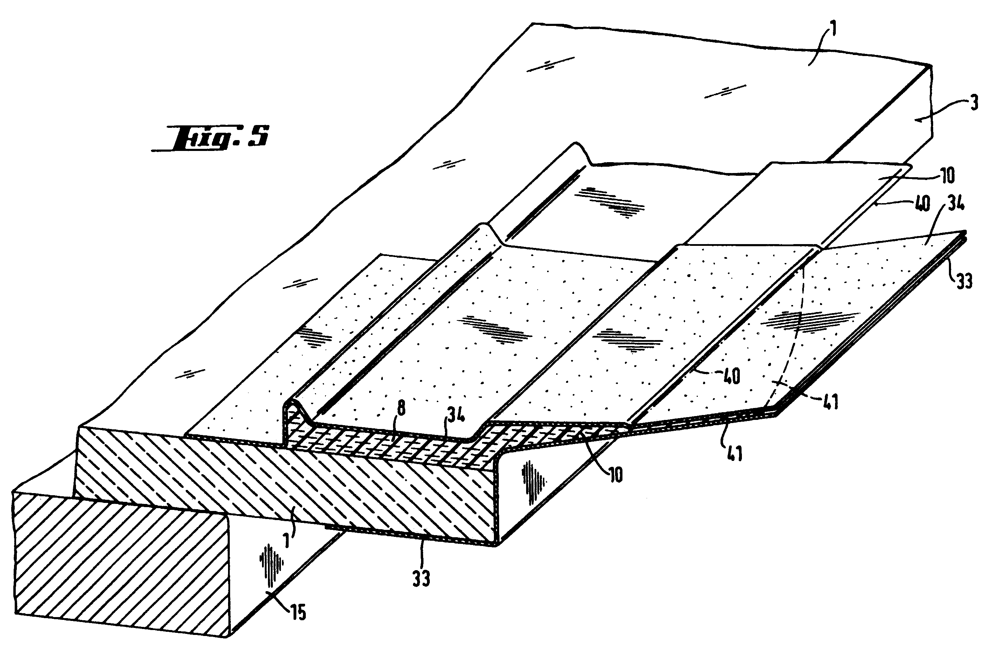

Les feuilles 33, 34 confèrent de plus à la lèvre 10 une rigidité supplémentaire durant la prise. L'excès de matière polymérisable est évacué pendant le processus de rectification ainsi qu'on l'a déjà vu, en direction du prolongement de la lèvre 10 et s'échappe sous forme d'une couche mince entre les deux feuilles 33, 34 où elle va durcir sous forme d'une bavure 41 qui déborde de la bordure 4O de la lèvre 1O (figure 5). Cette bavure 41 sera comme les feuilles 33 et 34, coupée et séparée du profilé 8 après polymérisation. Cette opération procure dans la zone de raccordement un aspect soigné à la lèvre 10 du cadre profilé 8. Pour terminer on arrache les feuilles 33, 34 restantes pour les séparer du profilé 8 et de la lèvre 10.

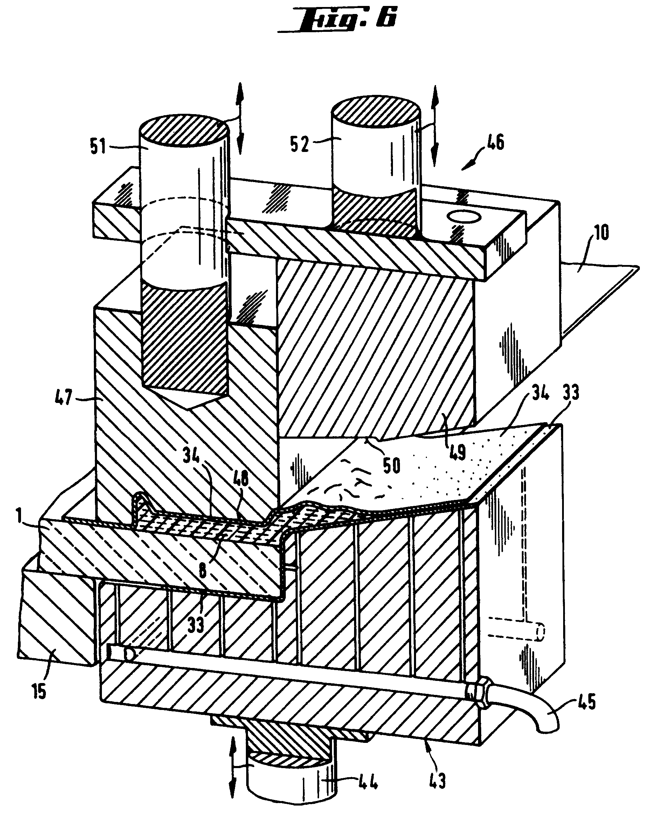

Sur la figure 6 on présente un autre mode de réalisation de l'outil de rectification. Le pied 43 a une constitution qui s'apparente à celle du pied 23 de la figure 6. Le pied est rélié par une tige de guidage 44, tout comme le poinçon 46, à un porte-outil non représenté. Le pied 43 est ici aussi équipé sur sa surface supérieure de perforations. Celles-ci sont également reliées à un ajutage répartiteur qui est en communication grâce à un tuyau 45 avec une pompe qui peut y créer une dépression.

Le poinçon 46 est constitué de deux parties : la première 47 qui comporte une surface de référence 48 correspondant à la section du cadre profilé qui se trouve au-dessus du verre, et une deuxième partie 49 elle aussi équipée d'une surface calibrée 50 destinée à conformer la lèvre 10. Les deux parties, la première 47 grâce à la tige de guidage 51, et la deuxième 49 grâce à la tige 52 peuvent être manoeuvrées indépendamment l'une de l'autre. Après que le pied 43 ait été mis en place mais avant que le poinçon n'ait effectué ses propres mouvements, le film plastique qui va ici aussi s'intercaler entre le poinçon et le cadre profilé est mis en place à la fois sur le joint informe et sur les surfaces voisines du vitrage 1 et du pied 43. Alors, la partie 47 du poinçon se déplace la première et vient épouser la partie supérieure du profilé 8 situé au-dessus du vitrage 1. Enfin, la partie 49 du même poinçon vient à son tour rectifier la forme de la lèvre 10.

Les exemples de réalisation de l'invention présentés ici sont relatifs au pare-brise d'un véhicule automobile. L'invention est aussi bien valable dans les mêmes conditions pour n'importe quel vitrage comme par exemple les lunettes arrière ou les vitrages de portière, de custode, de hayon, de toit ou de protection de phares. Par ailleurs, la méthode de l'invention convient également à tous les domaines où un vitrage doit être fixé par collage à l'intérieur d'un cadre. Dans le domaine des transports, ce sera le cas par exemple des vitrages de chemin de fer ou de caravane mais les applications dans le domaine du bâtiment, dans celui du mobilier, ou même de l'appareillage ou de l'électroménager sont également à envisager.

## Revendications

1. Procédé pour fabriquer un vitrage, particulièrement un vitrage automobile (1) destiné au collage direct dans la baie d'une fenêtre, le vitrage étant équipé d'un cadre profilé extrudé (8) muni d'une lèvre (10) débordant de la périphérie du vitrage (1), procédé dans lequel on place sur le bord du vitrage, le vitrage étant dans une position sensiblement horizontale lors de l'extrusion, une buse profilée (16) à ouverture calibrée (18) afin d'extruder le cadre (8) et la lèvre (10) et où on déplace la buse (16) le long de celui-ci en l'alimentant régulièrement avec le polymère puis en arrêtant le débit et en écartant la buse (16) du vitrage (1) lorsqu'elle a rejoint les environs de sa position de départ, la viscosité et la thixotropie du polymère étant telles que la lèvre (10) débordant de la périphérie du vitrage reste en place sans appui, *caractérisé en ce que* le domaine de transition entre le début et la fin du profilé extrudé est rectifié par deux outils calibrés dont l'un (23 ; 43) est fixe tandis que l'autre (25 ; 47, 49) est mobile.

2. Procédé selon la revendication 1, *caractérisé en ce que* la bavure (41) qui subsiste après la rectification avec les outils calibrés (23, 25 ; 43, 47, 49) est séparée après prise totale du polymère.

3. Procédé selon la revendication 1 ou 2, *caractérisé en ce qu'*on place entre les outils calibrés (23, 25 ; 43, 47, 49) et le profilé extrudé (8) des films minces (33, 34) qui restent au contact du profilé (8) à la fin de la rectification et qui sont séparés après prise du polymère.

4. Procédé selon les revendications 2 et 3, *caractérisé en ce qu'*on ébavure l'extrémité de la lèvre (10) avec ses deux films protecteurs (33, 34) puis qu'on sépare les deux films protecteurs eux-mêmes du profilé (8).

5. Procédé selon la revendication 3 ou 4, *caractérisé en ce qu'*on utilise comme matériaux pour les films protecteurs (33, 34) du polyéthylène ou du polyester avec une épaisseur de 3 à 20 µm.

6. Procédé selon la revendication 4, *caractérisé en ce que* lorsqu'on utilise un polymère qui polymérise à l'humidité de l'air, le film (33, 34) recouvrant le profilé (8) est un film perméable à la vapeur d'eau.

7. Procédé selon la revendication 6, *caractérisé en ce que* les films (33, 34) sont percés de microperforations.

8. Procédé selon l'une des revendications 3 à 6, *caractérisé en ce que* les films (33, 34) sont fixés par dépression sur les surfaces (29, 30) des outils calibrés (23, 25 ; 43).

9. Procédé selon l'une des revendications 1 à 8, *caractérisé en ce que* l'outil mobile (25) avec une forme inférieure précise est déplacé au-dessus du profilé (8) sous une inclinaison telle que c'est la partie de l'outil (25) opposée à la lèvre (10) qui touche la première le vitrage (1) et en ce qu'ensuite seulement l'outil (25) dans un mouvement de bascule vient au contact de l'outil fixe (23) qui a été mis en position antérieurement.

10. Procédé selon l'une des revendications 1 à 8, *caractérisé en ce que* après que l'outil fixe (43) a été mis en place, c'est d'abord l'outil mobile (47) qui vient épouser la partie supérieure du profilé (8) située au-dessus du vitrage (1) puis dans un deuxième temps, l'outil mobile (49) qui vient rectifier la forme de la lèvre (10).

11. Dispositif pour rectifier immédiatement après fabrication du vitrage suivant le procédé selon l'une des revendications précédentes, la fin et le début d'un cadre profilé extrudé (3) muni d'une lèvre (10) débordant de la périphérie du vitrage (1), le cadre profilé (8) étant engendré par le déplacement de la buse (16) le long du bord du vitrage (1), *caractérisé en ce qu'*il comporte un pied inférieur (23, 43) destiné à toucher le vitrage par le dessous et ayant une forme épousant la lèvre (10) ainsi qu'un poinçon (25 ; 47, 49) dont la forme épouse la forme supérieure à donner au profilé (8) et à la lèvre (10), ce poinçon (25 ; 47, 49) étant mobile de manière à rectifier le cadre (8) et la lèvre (10) par pressage contre le pied inférieur (23, 43).

12. Dispositif selon la revendication 11, *caractérisé en ce qu'*il est équipé de moyens de mouvement et de guidage qui approchent le poinçon (25) en biais jusqu'au contact sur le vitrage (1) et qui le font tourner jusqu'au contact avec le pied inférieur (23).

13. Dispositif selon la revendication 11, *caractérisé en ce qu'*il est équipé de moyens de mouvement et de guidage qui approchent d'abord une partie du poinçon (47) pour le mettre au contact du vitrage (1) puis dans un deuxième temps approchent une partie du poinçon (49) jusqu'au contact du pied inférieur (43).

14. Dispositif selon l'une des revendications 11 à 13, *caractérisé en ce que* le pied inférieur (23, 43) et le poinçon (25) sont équipés de perçages (35) débouchant sur leurs surfaces.

## Claims

1. Method of making a pane, especially an automobile pane (1) intended to be glued directly into the opening of a window, the pane being provided with an extruded profiled frame (8) provided with a lip (10) projecting beyond the periphery of the pane (1), in which method a profiled nozzle (16) having a calibrated opening (18) is placed on the edge of the pane for the purpose of extruding the frame (8) and the lip (10), the pane being in a substantially horizontal position during the extrusion, and in which the nozzle (16) is moved along the edge in order to supply it uniformly with the polymer then, by stopping the flow and by separating the nozzle (16) from the pane (1) when the nozzle has reached the vicinity of its starting position, the viscosity and the thixotropy of the polymer being such that the lip (10) projecting beyond the periphery of the pane remains in place without support, characterized in that the transition region between the start and the end of the extruded profile is trued by two calibrated tools, of which the one (23 ; 43) is fixed, while the other (25 ; 47 ; 49) is movable.

2. Method according to claim 1, characterized in that the flash (41) which remains after the trueing with the calibrated tools (23, 25 ; 43, 47, 49) is removed after complete setting of the polymer.

3. Method according to claim 1 or 2, characterized in that there are placed ; between the calibrated tools (23, 25 ; 43, 47, 49) and the extruded profile (8), thin films (33, 34) which remain in contact with the profile (8) at the end of trueing and which are removed after the polymer has set.

4. Method according to claims 2 and 3, characterized in that the end of the lip (10) with its two protective films (33, 34) is trimmed off, then the two protective films themselves are removed from the profile (8).

5. Method according to claim 3 or 4, characterized in that polyethylene or polyester having a thickness of 3 to 20 µm are used as materials for the protective films (33, 34).

6. Method according to claim 4, characterized in that, when a polymer which polymerises with atmospheric humidity is used, the film (33, 34) covering the profile (8) is a film permeable to water vapour.

7. Method according to claim 6, characterized in that the films (33, 34) are perforated by microperforations.

8. Method according to claims 3 to 6, characterized in that the films (33, 34) are fixed by suction to the surfaces (29, 30) of the calibrated tools (23, 25 ; 43).

9. Method according to one of claims 1 to 8, characterized in that the movable tool (25) with an accurate lower shape is displaced above the profile (8) at an inclination such that it is the part of the tool (25) remote from the lip (10) which first touches the pane (1), and in that afterwards only the tool (25), in a pivoting movement, comes into contact with the fixed tool (23) which has previously been placed in position.

10. Method according to one of claims 1 to 8, characterized in that, after the fixed tool (43) has been placed in position, it is firstly the movable tool (47) which comes to fit accurately the upper part of the profile (8) situated above the pane (1) and then, in a second time, the movable tool (49) which trues the shape of the lip (10).

11. Device for trueing, immediately after the production of the pane by the method according to one of the preceding claims, the end and the start of an extruded profiled frame (8) provided with a lip (10) projecting beyond the periphery of the pane (1), the profiled frame (8) being produced by the displacement of the nozzle (16) along the edge of the pane (1), characterized in that the device comprises a lower foot (23, 43) intended for touching the pane from below and having a shape that closely fits the lip (10) and also a mould or die (25 ; 47 ; 49), the shape of which closely fits the upper shape to be given to the profile (8) and to the lip (10), this die (25 ; 47, 49) being movable in such a way as to true the frame (8) and the lip (10) by pressing against the foot (23, 43).

12. Device according to claim 11, characterized in that it is equipped with movement and guidance means which cause the die (25) to approach in an inclined position until contact with the pane (1) and which then cause it to rotate until it comes into contact with the lower foot (23).

13. Device according to claim 11, characterized in that it is equipped with movement and guidance means which cause a portion of the die (47) first to approach to bring it into contact with the pane (1) and then, in a second time, cause a portion of the die (49) to approach until in contact with the lower foot (43).

14. Device according to one of claims 11 to 13, characterized in that the lower foot (23, 43) and the die (25) are equipped with perforations (35) leading out on to their faces.

## Patentansprüche

1. Verfahren zur Herstellung einer Glasscheibe, insbesondere einer für die Direktverklebung mit dem Fensterrahmen bestimmten Autoglasscheibe (1), die mit einem extrudierten Profilrahmen (8) versehen ist, der eine über den Umfang der Glasscheibe (1) hinausragende Lippe (10) aufweist, bei dem zur Extrusion des Rahmens (8) und der Lippe (10) eine profilierte Düse (16) mit einer kalibrierten Düsenöffnung (18) auf den Rand der Glasscheibe aufgesetzt wird, die Glasscheibe während der Extrusion in einer im wesentlichen horizontalen Lage sich befindet, und unter gleichmäßiger Zufuhr des Polymers an diesem entlanggeführt wird, anschließend die Zufuhr des Polymers unterbrochen und die Düse (16) von der Glasscheibe (1) abgehoben wird, wenn sie wieder in die Nähe ihrer Ausgangsposition kommt, und für die Extrusion ein Polymer mit einer solchen Viskosität und einer solchen Thixotropie verwendet wird, daß die über den Scheibenumfang hinausragende Lippe (10) ohne Unterstützung in ihrer Lage verbleibt, dadurch gekennzeichnet, daß der Übergangsbereich zwischen dem Anfang und dem Ende des extrudierten Profils durch zwei kalibrierte Werkzeuge nachgeformt wird, wobei das eine Werkzeug (23 ; 43) fest und das andere (25 ; 47,49) beweglich angeordnet ist.

2. Verfahren nach Anspruch 1, dadurch gekennzeichnet, daß der nach der Nachformung mit den kalibrierten Werkzeugen (23,25 ; 43,47,49) überstehende Grat nach der vollständigen Aushärtung des Polymers entfernt wird.

3. Verfahren nach Anspruch 1 oder 2, dadurch gekennzeichnet, daß zwischen die kalibrierten Werkzeuge (23,25 ; 43,47,49) und das extrudierte Profil (8) dünne Folien (33,34) zwischengeschaltet werden, die am Ende des Nachformvorgangs im Kontakt mit dem Profil (8) verbleiben und nach dem Aushärten des Polymers entfernt werden.

4. Verfahren nach Anspruch 2 oder 3, dadurch gekennzeichnet, daß der Grat am Ende der Lippe (10) zusammen mit den beiden Schutzfolien (33, 34) abgetrennt und dann die beiden Schutzfolien selbst von dem Profil (8) entfernt werden.

5. Verfahren nach Anspruch 3 oder 4, dadurch gekennzeichnet, daß als Materialien für die Schutzfolien (33, 34) Folien aus Polyethylen oder Polyester mit einer Dicke von 3 bis 20 µm verwendet werden.

6. Verfahren nach Anspruch 4, dadurch gekennzeichnet, daß bei Verwendung eines luftfeuchtigkeitshärtenden Polymers die das Profil (8) abdeckende Folie (33, 34) eine wasserdampfdurchlässige Folie ist.

7. Verfahren nach Anspruch 6, dadurch gekennzeichnet, daß die Folien (33, 34) mit mikrofeinen Löchern versehen sind.

8. Verfahren nach Anspruch 3 bis 6, dadurch gekennzeichnet, daß die Folien (33, 34) durch Unterdruck an den Oberflächen (29, 30) der kalibrierten Werkzeuge (23, 25;43) festgehalten werden.

9. Verfahren nach einem der Ansprüche 1 bis 8, dadurch gekennzeichnet, daß das bewegliche Werzeug (25) mit einer unteren präzisen Formfläche unter einer solchen Neigung auf das Profil (8) aufgesetz wird, daß zunächst der der Lippe (10) abgewandte Teil des Werkzeugs (25) die Glasscheibe (1) berührt, und daß anschließend das Werkzeug (25) in einer Kippbewegung mit dem fest angeordneten Werkzeug (23) in Kontakt kommt, das vorher in Position gebracht wurde.

10. Verfahren nach einem der Ansprüche 1 bis 8, dadurch gekennzeichnet, daß zunächst das fest angeordnete Werkzeug (43) in Position gebracht, darauf das bewegliche Werkzeug (47), soweit es mit dem oberen Teil des oberhalb der Glasscheibe (1) gelegenen Profils (8) in Berührung kommt, und dann in einem zweiten Schritt das die Form der Lippe (10) nachformende bewegliche Werkzeug (49) betätigt wird.

11. Vorrichtung zum Nachformen unmittelbar im Anschluß an die Herstellung der Glasscheibe nach dem Verfahren nach einem der voraufgehenden Ansprüche, bei dem das Ende und der Anfang eines mit einer über den Umfang der Glasscheibe (1) hinausragenden Lippe (10) versehenen extrudierten und durch Bewegung der Düse (16) entlang dem Rand der Glasscheibe (1) gebildeten Profilrahmens (8) nachgeformt wird, dadurch gekennzeichnet, daß sie einen unteren Preßstempel (23, 43) umfaßt, der die Glasscheibe von unten berürhrt und eine der Lippe (10) entsprechende Form aufweist, sowie einen oberen Preßstempel (25 ; 47, 49) mit einer der dem Profil (8) und der Lippe (10) zu gebenden Form entsprechenden Form, wobei dieser Preßstempel (25 ; 47, 49) derart beweglich ist, daß der Rahmen (8) und die Lippe (10) durch Pressen gegen den unteren Preßstempel (23, 43) nachgeformt werden.

12. Vorrichtung nach Anspruch 11, dadurch gekennzeichnet, daß sie mit Mitteln zur Bewegung und zur Führung versehen ist, die den oberen Preßstempel (25) in schräger Lage bis zum Kontakt an die Glasscheibe (1) annähern und dann bis zur Berührung mit dem unteren Preßstempel (23) verschwenken.

13. Vorrichtung nach Anspruch 11, dadurch gekennzeichnet, daß sie mit Mitteln zur Bewegung und zur Führung versehen ist, die zunächst einen Teil des Preßstempels (47) bis zum Kontakt mit der Glasscheibe (1) an diese annähern und dann in einem zweiten Schritt einen Teil des Preßstempels (49) bis zum Kontakt mit dem unteren Preßstempel (43) vorschieben.

14. Vorrichtung nach einem der Ansprüche 11 bis 13, dadurch gekennzeichnet, daß der untere Preßstempel (23, 43) und der obere Preßstempel (25) mit in ihren Oberflächen mündenden Bohrungen (35) versehen sind.
